# EUROPÄISCHE PATENTANMELDUNG

(11) **EP 4 573 871 A1**
(43) Veröffentlichungstag der Anmeldung: **25.06.2025**
(21) Anmeldenummer: 24214386.5
(22) Anmeldetag: 21.11.2024
(51) Int. Cl.: A01D 34/00

(54) **BODENBEARBEITUNGSMASCHINE**

(30) Priorität: 20.12.2023 DE 102023135900
(71) Anmelder: Hamm AG, 95643 Tirschenreuth (DE)
(72) Erfinder: Klein, Thomas, Mitterteich (DE); Bornemann, Detlef, Leonberg (DE)
(74) Vertreter: Ruttensperger Lachnit Trossin Gomoll

(57) **Zusammenfassung**

Bei einer Bodenbearbeitungsmaschine mit zwei in einer Maschinenlängsrichtung aufeinander folgend angeordneten, um eine jeweilige Drehachse (D₁, D₂) drehbaren Antriebsrollen (12, 14), wobei jede Antriebsrolle (12, 14) zwei in Richtung der zugeordneten Drehachse (D₁, D₂) aufeinander folgend angeordnete Antriebsrollensegmente (12a, 12b, 14a, 14b) umfasst, und mit einem hydraulischen Antriebssystem (24) für die Antriebsrollen (12, 14), ist ein erster Fluidanschluss (28) einer ersten Fahr-Hydraulikpumpe (P₁) vermittels einer ersten Hydraulikleitung (L₁) mit einem ersten Fluidanschluss (30) eines ersten Fahr-Hydraulikmotors (M₁) und einem ersten Fluidanschluss (32) eines zweiten Fahr-Hydraulikmotors (M₂) verbunden oder verbindbar, ist ein erster Fluidanschluss (34) einer zweiten Fahr-Hydraulikpumpe (P₂) vermittels einer zweiten Hydraulikleitung (L₂) mit einem ersten Fluidanschluss (36) eines dritten Fahr-Hydraulikmotors (M₃) und einem ersten Fluidanschluss (38) eines vierten Fahr-Hydraulikmotors (M₄) verbunden oder verbindbar, ist ein zweiter Fluidanschluss (40) einer ersten Fahr-Hydraulikpumpe (P₁) vermittels einer dritten Hydraulikleitung (L₃) mit einem zweiten Fluidanschluss (42) eines zweiten Fahr-Hydraulikmotors (M₂) und einem zweiten Fluidanschluss (44) eines dritten Fahr-Hydraulikmotors (M₃) verbunden oder verbindbar, und ist ein zweiter Fluidanschluss (46) einer zweiten Fahr-Hydraulikpumpe (P₂) vermittels einer vierten Hydraulikleitung (L₄) mit einem zweiten Fluidanschluss (48) eines ersten Fahr-Hydraulikmotors (M₁) und einem zweiten Fluidanschluss (50) eines vierten Fahr-Hydraulikmotors (M₄) verbunden oder verbindbar.

## Beschreibung

Die vorliegende Erfindung betrifft eine Bodenbearbeitungsmaschine mit zwei in einer Maschinenlängsrichtung aufeinander folgend angeordneten, um eine jeweilige Drehachse drehbaren Antriebsrollen, wobei jede Antriebsrolle zwei in Richtung der zugeordneten Drehachse aufeinander folgend angeordnete Antriebsrollensegmente umfasst, und mit einem hydraulischen Antriebssystem für die Antriebsrollen.

Um bei derartigen beispielsweise als Bodenverdichter ausgebildeten Bodenbearbeitungsmaschinen dann, wenn bei einem oder mehreren der Antriebsrollensegmente ein Schlupf auftritt, dafür sorgen zu können, dass über andere Antriebsrollensegmente weiterhin ein Drehmoment übertragen werden kann, ist es bekannt, Mengenteiler einzusetzen, die dann, wenn in einem Schlupfzustand eines Antriebsrollensegments ein übermäßiger Fluidabfluss über den einem derartigen Antriebsrollensegment zugeordneten Hydraulik-Antriebsmotor auftritt, die Fluidzufuhr zu diesem Antriebsrollensegment sperren bzw. drosseln und somit eine ausreichende Zufuhr von Fluid zu den nicht schlupfenden Antriebsrollen aufrecht erhalten.

Es ist die Aufgabe der vorliegenden Erfindung, eine Bodenbearbeitungsmaschine vorzusehen, bei welcher bei konstruktiv einfacher und die eingesetzte Energie effizient nutzender Ausgestaltung eines hydraulischen Antriebssystems das Auftreten von Schlupfzuständen eines oder mehrerer Antriebsrollensegmente vermieden werden kann.

Erfindungsgemäß wird diese Aufgabe gelöst durch eine Bodenbearbeitungsmaschine mit zwei in einer Maschinenlängsrichtung aufeinander folgend angeordneten, um eine jeweilige Drehachse drehbaren Antriebsrollen, wobei jede Antriebsrolle zwei in Richtung der zugeordneten Drehachse aufeinander folgend angeordnete Antriebsrollensegmente umfasst, und mit einem hydraulischen Antriebssystem für die Antriebsrollen, wobei das hydraulische Antriebssystem umfasst:
- in Zuordnung zu einem ersten Antriebsrollensegment der zwei Antriebsrollen einen ersten Fahr-Hydraulikmotor,
- in Zuordnung zu einem zweiten Antriebsrollensegment der zwei Antriebsrollen einen zweiten Fahr-Hydraulikmotor,
- in Zuordnung zu einem dritten Antriebsrollensegment der zwei Antriebsrollen einen dritten Fahr-Hydraulikmotor
- in Zuordnung zu einem vierten Antriebsrollensegment der zwei Antriebsrollen einen vierten Fahr-Hydraulikmotor,
- eine erste Fahr-Hydraulikpumpe,
- eine zweite Fahr-Hydraulikpumpe,
- wenigstens einen Antriebsmotor zum Antreiben der ersten Fahr-Hydraulikpumpe und der zweiten Fahr-Hydraulikpumpe zum Fördern von Hydraulikfluid zu den Fahr-Hydraulikmotoren,
wobei:
- ein erster Fluidanschluss der ersten Fahr-Hydraulikpumpe vermittels einer ersten Hydraulikleitung mit einem ersten Fluidanschluss des ersten Fahr-Hydraulikmotors und einem ersten Fluidanschluss des zweiten Fahr-Hydraulikmotors verbunden oder verbindbar ist,
- ein erster Fluidanschluss der zweiten Fahr-Hydraulikpumpe vermittels einer zweiten Hydraulikleitung mit einem ersten Fluidanschluss des dritten Fahr-Hydraulikmotors und einem ersten Fluidanschluss des vierten Fahr-Hydraulikmotors verbunden oder verbindbar ist,
- ein zweiter Fluidanschluss der ersten Fahr-Hydraulikpumpe vermittels einer dritten Hydraulikleitung mit einem zweiten Fluidanschluss des zweiten Fahr-Hydraulikmotors und einem zweiten Fluidanschluss des dritten Fahr-Hydraulikmotors verbunden oder verbindbar ist,
- ein zweiter Fluidanschluss der zweiten Fahr-Hydraulikpumpe vermittels einer vierten Hydraulikleitung mit einem zweiten Fluidanschluss des ersten Fahr-Hydraulikmotors und einem zweiten Fluidanschluss des vierten Fahr-Hydraulikmotors verbunden oder verbindbar ist.

Bei der erfindungsgemäß aufgebauten Bodenbearbeitungsmaschine sind unabhängig von der Fluidströmungsrichtung und damit auch unabhängig davon, in welcher Drehrichtung die Fahr-Hydraulikmotoren arbeiten, die den verschiedenen Antriebsrollensegmenten zugeordneten Fahr-Hydraulikmotoren abflussseitig über Kreuz mit den beiden Fahr-Hydraulikpumpen verbunden. Dies bedeutet, dass zwei zuflussseitig mit einer der beiden Fahr-Hydraulikpumpen verbundene Fahr-Hydraulikmotoren abflussseitig nicht beide mit dieser Fahr-Hydraulikpumpe verbunden sind. Einer der beiden zuflussseitig mit der selben Fahr-Hydraulikpumpe verbundenen Fahr-Hydraulikmotoren ist abflussseitig zusammen mit einem anderen der Fahr-Hydraulikmotoren mit der anderen Fahr-Hydraulikpumpe verbunden.

Dies hat zur Folge, dass bei Auftreten von Schlupf bei einem der Antriebsrollensegmente ein Abfluss einer größeren Fluidmenge über den diesem Antriebsrollensegment zugeordneten Fahr-Hydraulikmotor dadurch verhindert wird, dass die mit der Abflussseite dieses Fahr-Hydraulikmotors verbundene Fahr Hydraulikpumpe auch im Schlupfzustand nur eine durch deren Drehzahl definierte Fluidmenge aufnimmt und daher die über den Fahr-Hydraulikmotor eines schlupfenden Antriebsrollensegments abfließende Fluidmenge im Wesentlichen begrenzt ist durch die von dem zusammen mit diesem Fahr-Hydraulikmotor abflussseitig mit der gleichen Fahr-Hydraulikpumpe verbundenen Fahr-Hydraulikmotor abgegebene Fluidmenge.

Ein übermäßiger Abfluss von Fluid über einen einem schlupfenden Antriebsrollensegment zugeordneten Fahr-Hydraulikmotor wird aufgrund dieser kreuzweisen abflussseitigen Verbindung der Fahr-Hydraulikmotoren mit den Fahr-Hydraulikpumpen ohne der Notwendigkeit, einen Mengenteiler vorzusehen, verhindert. Dies führt zu einer konstruktiv deutlichen einfacheren Ausgestaltung des hydraulischen Antriebssystems und aufgrund des Umstandes, dass Mengenteiler im Allgemeinen zu Energieverlusten führen, einem effizienteren Einsatz der zum Antrieb der Fahr-Hydraulikpumpen bereitgestellten Energie. Dies ist besonders bei elektrohydraulischen Antriebssystemen von Vorteil, bei welchen die Fahr-Hydraulikpumpen von zumindest einem Elektroantriebsmotor angetrieben werden und die Menge der in Energiespeichern aufnehmbaren elektrischen Energie und damit auch die Reichweite bzw. die Arbeitsdauer einer Bodenbearbeitungsmaschine begrenzt ist.

Um bei einfacher Ausgestaltung des hydraulischen Antriebssystems zu gewährleisten, dass beide Fahr-Hydraulikpumpen im Wesentlichen die gleiche Menge von Fluid fördern, um gleiche Drehzahlen an allen Fahr-Hydraulikmotoren erreichen zu können, können beide Fahr-Hydraulikpumpen durch einen gemeinsamen Antriebsmotor zum Fördern von Hydraulikfluid angetrieben sein oder/und können beide Fahr-Hydraulikpumpen das gleiche Fördervolumen aufweisen. Weiter können alle Fahr-Hydraulikmotoren das gleiche Schluckvolumen aufweisen. Dabei kann das Fördervolumen einer Fahr-Hydraulikpumpe beispielsweise das pro Umdrehung der Fahr-Hydraulikpumpe abgegebene Fluidvolumen sein, und das Schluckvolumen eines Fahr-Hydraulikmotors kann das pro Umdrehung des Fahr-Hydraulikmotors aufgenommene Fluidvolumen sein.

Um eine Bodenbearbeitungsmaschine elektrohydraulisch betreiben zu können, kann der wenigstens eine Antriebsmotor ein Elektromotor sein.

Insbesondere bei elektrohydraulischen Antriebssystemen, also dann, wenn ein oder mehrere Antriebsmotoren als Elektromotoren ausgebildet sind, ist es zum Erhalt eines einfach strukturierten hydraulischen Antriebssystems vorteilhaft, wenn jede Fahr-Hydraulikpumpe eine Pumpe mit festem Fördervolumen ist, oder/und wenn jeder Fahr-Hydraulikmotor ein Motor mit festem Schluckvolumen ist. Dies bedeutet, dass im Betrieb die Fahr-Hydraulikpumpen bzw. die Fahr-Hydraulikmotoren nicht verstellt werden müssen, um unterschiedliche Drehzahlen und damit auch unterschiedliche Fahrgeschwindigkeiten der Bodenbearbeitungsmaschine zu erreichen. Dies kann allein durch Änderung der Drehzahl des bzw. der Antriebsmotoren erreicht werden.

Eine erweiterte Vernetzung der Fahr-Hydraulikmotoren für eine weiter verbesserte Schlupfkontrolle kann dadurch erreicht werden, dass:
- in Zuordnung zu dem zweiten Fluidanschluss des ersten Fahr-Hydraulikmotors eine erste Ventileinheit zum wahlweisen Herstellen und Unterbrechen einer Verbindung des zweiten Fluidanschlusses des ersten Fahr-Hydraulikmotors mit der dritten Hydraulikleitung und eine zweite Ventileinheit zum wahlweisen Herstellen und Unterbrechen einer Verbindung des zweiten Fluidanschlusses des ersten Fahr-Hydraulikmotors mit der vierten Hydraulikleitung vorgesehen ist,
   und
- in Zuordnung zu dem zweiten Fluidanschluss des zweiten Fahr-Hydraulikmotors eine dritte Ventileinheit zum wahlweisen Herstellen und Unterbrechen einer Verbindung des zweiten Fluidanschlusses des zweiten Fahr-Hydraulikmotors mit der dritten Hydraulikleitung und eine vierte Ventileinheit zum wahlweisen Herstellen und Unterbrechen einer Verbindung des zweiten Fluidanschlusses des zweiten Fahr-Hydraulikmotors mit der vierten Hydraulikleitung vorgesehen ist.

Somit wird es möglich, die Paarungen der abflussseitig mit der gleichen Fahr-Hydraulikpumpe verbundenen Fahr-Hydraulikmotoren in Abhängigkeit davon, an welchem Antriebsrollensegment Schlupf auftritt zu wechseln.

Um die kreuzweise Verschaltung der Fahr-Hydraulikmotoren mit den Fahr-Hydraulikpumpen abhängig davon, an welchem der Antriebsrollensegmente Schlupf auftritt, definiert wechseln zu können, kann eine Ansteueranordnung zum Ansteuern der ersten Ventileinheit, der zweiten Ventileinheit, der dritten Ventileinheit und der vierten Ventileinheit vorgesehen sein, welche dazu ausgebildet ist:
- dann, wenn die erste Ventileinheit zum Herstellen der Verbindung des zweiten Fluidanschlusses des ersten Fahr-Hydraulikmotors mit der dritten Hydraulikleitung und die vierte Ventileinheit zum Herstellen der Verbindung des zweiten Fluidanschlusses des zweiten Fahr-Hydraulikmotors mit der vierten Hydraulikleitung betrieben werden, die zweite Ventileinheit zum Unterbrechen der Verbindung des zweiten Fluidanschlusses des ersten Fahr-Hydraulikmotors mit der vierten Hydraulikleitung und die dritte Ventileinheit zum Unterbrechen der Verbindung des zweiten Fluidanschlusses des zweiten Fahr Hydraulikmotors mit der dritten Hydraulikleitung zu betreiben,
   und
- dann, wenn die erste Ventileinheit zum Unterbrechen der Verbindung des zweiten Fluidanschlusses des ersten Fahr-Hydraulikmotors mit der dritten Hydraulikleitung und die vierte Ventileinheit zum Unterbrechen der Verbindung des zweiten Fluidanschlusses des zweiten Fahr-Hydraulikmotors mit der vierten Hydraulikleitung betrieben werden, die zweite Ventileinheit zum Herstellen der Verbindung des zweiten Fluidanschlusses des ersten Fahr-Hydraulikmotors mit der vierten Hydraulikleitung und die dritte Ventileinheit zum Herstellen der Verbindung des zweiten Fluidanschlusses des zweiten Fahr Hydraulikmotors mit der dritten Hydraulikleitung zu betreiben.

Um Fluidleckagen beispielsweise im Bereich der Fahr-Hydraulikmotoren kompensieren zu können, kann eine Fluid-Einspeiseanordnung vorgesehen sein zum Einspeisen von Fluid in wenigstens eine Fluidleitung von erster Fluidleitung, zweiter Fluidleitung, dritter Fluidleitung und vierter Fluidleitung.

Eine derartige Fluid-Einspeiseanordnung ist im Allgemeinen so ausgelegt, dass sie Fluid auf der Niederdruckseite eines Hydraulikkreislauf, also in die Fahr-Hydraulikmotoren abflussseitig mit den Fahr-Hydraulikpumpen verbindende Hydraulikleitungen, einspeist, um im Bereich dieser Leitungen den Fluiddruck auf einem definierten Niveau zu halten. In Wechselwirkung mit einer derartigen Fluid-Einspeiseanordnung kann bei Auftreten von Schlupf an einem Antriebsrollensegment der zugeordnete Fahr-Hydraulikmotor kurzzeitig mit leicht erhöhter Drehzahl und damit auch entsprechend größerem Fluidabfluss arbeiten. Der größere Fluidabfluss über einen derartigen Fahr-Hydraulikmotor kann auch bei grundsätzlich durch die von einem anderen Fahr-Hydraulikmotor zur selben Fahr-Hydraulikpumpe zurückgespeisten Fluidmenge definierter Begrenzung durch eine geringere Einspeisung von Fluid durch die Fluid-Einspeiseanordnung kompensiert werden. Durch diese Wechselwirkung stellt sich an einem einem Antriebsrollensegment mit Traktionsverlust zugeordneten Fahr-Hydraulikmotor ein verringertes Antriebsdrehmoment ein, welches dem über dieses Antriebsrollensegment maximal ohne Schlupf übertragbaren Antriebsdrehmoment entspricht.

Eine erste Antriebsrolle der zwei Antriebsrollen kann das erste Antriebsrollensegment und das zweite Antriebsrollensegment umfassen, und eine zweite Antriebsrolle der zwei Antriebsrollen kann das dritte Antriebsrollensegment und das vierte Antriebsrollensegment umfassen.

Um durch eine definierte Zuordnung der kreuzweise verschalteten Fahr-Hydraulikmotoren zu den verschiedenen Antriebsrollensegmenten die Wahrscheinlichkeit, dass ein Zustand auftritt, in welchem zwei einander grundsätzlich in der Fluidabflussmenge begrenzende Fahr-Hydraulikmotoren gleichzeitigen einen Schlupfzustands gelangen, zu verringern, wird vorgeschlagen, dass, bezogen auf eine Maschinen-Längsrichtung, das erste Antriebsrollensegment und das dritte Antriebsrollensegment an einer ersten Seite der Bodenbearbeitungsmaschine angeordnet sind und das zweite Antriebsrollensegment und das vierte Antriebsrollensegment an einer zweiten Seite der Bodenbearbeitungsmaschine angeordnet sind. Diese Zuordnung der Fahr-Hydraulikmotoren zu den Antriebsrollensegmenten ermöglicht ferner, dass bei Kurvenfahrt an den jeweils kurveninneren und kurvenäußeren Antriebsrollensegmenten unterschiedliche Drehzahlen auftreten, ohne dass die abflussseitig miteinander verbundenen Fahr-Hydraulikmotoren sich mit den von diesen jeweils abgegebenen Fluidmengen gegenseitig blockieren.

Bei Ausgestaltung einer Bodenbearbeitungsmaschine als Bodenverdichter kann wenigstens eine Antriebsrolle der zwei Antriebsrollen eine Bodenbearbeitungswalze sein, wobei jedes Antriebsrollensegment der wenigstens einen Antriebsrolle durch ein Walzensegment bereitgestellt ist. Alternativ oder zusätzlich kann wenigstens eine Antriebsrolle der zwei Antriebsrollen wenigstens zwei Räder umfassen, wobei jedes Antriebsrollensegment der wenigstens einen Antriebsrolle wenigstens ein Rad umfasst. Derartige Antriebsräder können rein dem Antrieb der Bodenbearbeitungsmaschine dienende, beispielsweise an beiden Seiten eines Hinterwagens positionierte Antriebsräder sein, oder können beispielsweise einander auch paarweise zugeordnete Gummiräder einer Gummiradwalze sein.

Um bei Auftreten von Schlupf geeignete Maßnahmen beispielsweise durch das definierte Schalten verschiedener Ventileinheiten ergreifen zu können, kann eine Schlupferfassungsanordnung zum Erfassen eines Schlupfzustandes wenigstens eines Antriebsrollensegments, vorzugsweise jedes Antriebsrollensegments, vorgesehen sein.

Dabei kann die Schlupferfassungsanordnung in Zuordnung zu wenigstens einem Antriebsrollensegment, vorzugsweise jedem Antriebsrollensegment, einen Drehzahlsensor umfassen.

Die vorliegende Erfindung wird nachfolgend mit Bezug auf die beiliegenden Figuren detailliert beschrieben. Es zeigt:
- Fig. 1: in prinzipartiger Darstellung eine als Bodenverdichter mit zwei Bodenbearbeitungswalzen ausgebildete Bodenbearbeitungsmaschine;
- Fig. 2: eine prinzipartige Darstellung einer alternativen Ausgestaltungsart einer als Bodenverdichter ausgebildeten Bodenbearbeitungsmaschine;
- Fig. 3: eine Ausgestaltungsart eines elektrohydraulischen Antriebssystems für eine Bodenbearbeitungsmaschine;
- Fig. 4: eine alternative Ausgestaltungsart eines elektrohydraulischen Antriebssystems für eine Bodenbearbeitungsmaschine.

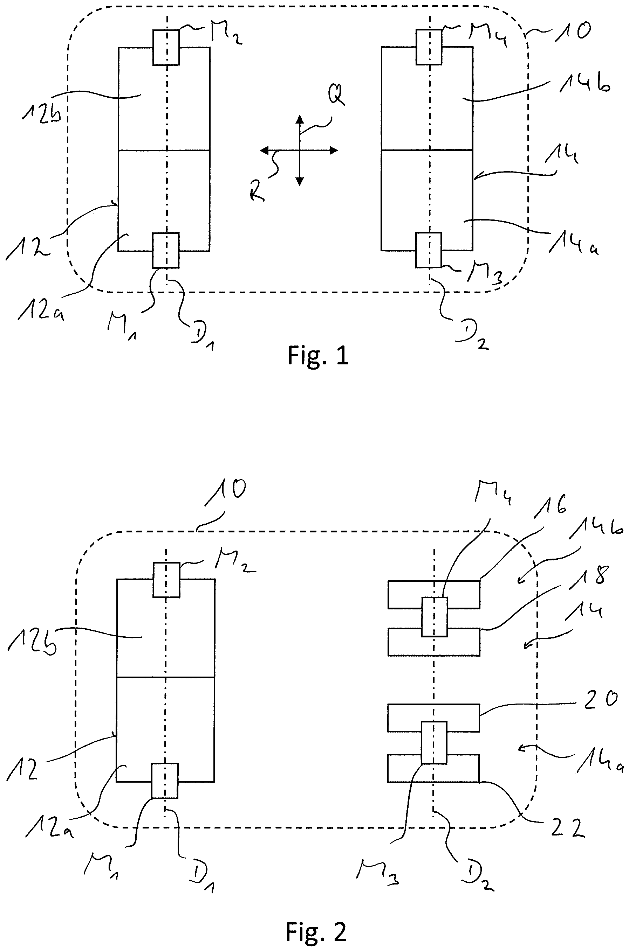

Die Fig. 1 zeigt in prinzipartiger Darstellung eine allgemein mit 10 bezeichnete und beispielsweise als Bodenverdichter ausgebildete Bodenbearbeitungsmaschine. Die als Bodenverdichter ausgebildete Bodenbearbeitungsmaschine 10 umfasst zwei in einer Maschinenlängsrichtung R derselben aufeinander folgend angeordnete und jeweils als Bodenbearbeitungswalze ausgebildete Antriebsrollen 12, 14. Die Antriebsrolle 12 ist um eine erste Drehachse D₁ drehbar, und die Antriebsrolle 14 ist um eine zweite Drehachse D₂ drehbar. Jeder der beiden Antriebsrollen 12, 14 sind zwei Fahr-Hydraulikmotoren M₁, M₂ bzw. M₃, M₄ zugeordnet. Beispielsweise können die einer jeweiligen Antriebsrolle 12 bzw. 14 zugeordneten Fahr-Hydraulikmotoren M₁, M₂, M₃, M₄ jeweils an deren axialen Enden angeordnet sein.

Die beiden Antriebsrollen 12, 14 sind als geteilte Bodenbearbeitungswalzen mit jeweiligen Antriebsrollensegmenten 12a, 12b bzw. 14a, 14b ausgebildet. Jedem der Antriebsrollensegmente 12a, 12b, 14a, 14b ist einer der vier Fahr-Hydraulikmotoren M₁, M₂, M₃, M₄ zugeordnet, so dass die beiden Antriebsrollensegmente 12a, 12b durch die diesen zugeordneten Fahr-Hydraulikmotoren M₁, M₂ voneinander unabhängig zur Drehung um die Drehachse D₁ angetrieben werden können und die beiden Antriebsrollensegmente 14a, 14b durch die diesen zugeordneten Fahr-Hydraulikmotoren M₃, M₄ voneinander unabhängig zur Drehung um die Drehachse D₂ angetrieben werden können.

Die Fig. 2 zeigt eine alternative Ausgestaltungsart einer derartigen beispielsweise als Bodenbearbeitungswalze ausgebildeten Bodenbearbeitungsmaschine 10. Die Bodenbearbeitungsmaschine 10 der Fig. 2 umfasst in einem ihrer Längsendbereiche wiederum die als Bodenbearbeitungswalze ausgebildete Antriebsrolle 12 mit den beiden dieser zugeordneten Fahr-Hydraulikmotoren M₁, M₂. Auch bei dieser Ausgestaltung umfasst die Antriebsrolle 12 zwei durch einen jeweils zugeordneten Fahr-Hydraulikmotor M₁, M₂ unabhängig voneinander zur Drehung um die Drehachse D₁ antreibbare Antriebsrollensegmente 12a, 12b. Im anderen Längsendbereich der Bodenbearbeitungsmaschine 10 umfasst die Antriebsrolle 14 Räder 16, 18, 20, 22. Diese können einander beispielsweise paarweise zugeordnet sein, und jedes Paar aus Rädern 16, 18 bzw. 20, 22 bildet ein Antriebsrollensegment 14a, 14b, das durch den diesem zugeordneten Fahr-Hydraulikmotor M₃ bzw. M₄ zur Drehung um die Drehachse D₂ angetrieben werden kann.

Es ist darauf hinzuweisen, dass auch andere Ausgestaltungsarten von derartigen Bodenbearbeitungsmaschinen im Kontext eines nachfolgend beschriebenen hydraulischen Antriebssystems Anwendung finden können. So kann beispielsweise bei einer als Bodenverdichter ausgebildeten Bodenbearbeitungsmaschine an einem Hinterwagen ein Paar von jeweils ein Antriebsrollensegment einer Antriebsrolle bildenden Antriebsrädern vorgesehen sein, während am Vorderwagen eine in Walzensegmente geteilte Bodenbearbeitungswalze als Antriebsrolle wirken kann. Die Prinzipien der vorliegenden Erfindung können sowohl bei schemelgelenkten Bodenbearbeitungsmaschinen bzw. Bodenverdichtern, als auch bei in Vorderwagen und Hinterwagen untergliederten Bodenbearbeitungsmaschinen Anwendung finden.

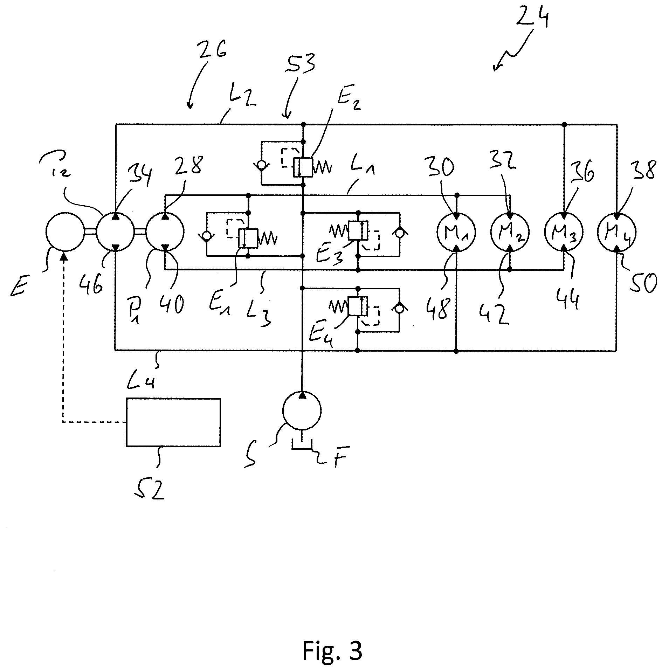

Die Fig. 3 zeigt ein hydraulisches Antriebssystem 24, welches im dargestellten Ausgestaltungsbeispiel ein elektrohydraulisches Antriebssystem ist und beispielsweise in Verbindung mit den vorangehend mit Bezug auf die Fig. 1 und 2 beschriebenen Bodenbearbeitungsmaschinen eingesetzt werden kann.

Das hydraulische Antriebssystem 24 umfasst in einem Hydraulikkreislauf 26 zwei Fahr-Hydraulikpumpen P₁, P₂ sowie die vier Fahr-Hydraulikmotoren M₁, M₂, M₃, M₄. Die beiden Fahr-Hydraulikpumpen P₁, P₂ sind gemeinsam durch einen als Elektromotor ausgebildeten Antriebsmotor E antreibbar.

Ein erster Fluidanschluss 28 der ersten Fahr-Hydraulikpumpe P₁ ist über eine erste Hydraulikleitung L₁ mit einem ersten Fluidanschluss 30 des ersten Fahr-Hydraulikmotors M₁ und einem ersten Fluidanschluss 32 des zweiten Fahr-Hydraulikmotors M₂ verbunden. Ein erster Fluidanschluss 34 der zweiten Fahr-Hydraulikpumpe P₂ ist über eine zweite Hydraulikleitung L₂ mit einem ersten Fluidanschluss 36 des dritten Fahr-Hydraulikmotors M₃ und einem ersten Fluidanschluss 38 des vierten Fahr-Hydraulikmotors M₄ verbunden.

Ein zweiter Fluidanschluss 40 der ersten Fahr-Hydraulikpumpe P₁ ist über eine dritte Fluidleitung L₃ mit einem zweiten Fluidanschluss 42 des zweiten Fahr-Hydraulikmotors M₂ und einem zweiten Fluidanschluss 44 des dritten Fahr-Hydraulikmotors M₃ verbunden. Ein zweiter Fluidanschluss 46 der zweiten Fahr-Hydraulikpumpe P₂ ist über eine vierte Fluidleitung L₄ mit einem zweiten Fluidanschluss 48 des ersten Fahr-Hydraulikmotors M₁ und einem zweiten Fluidanschluss 50 des vierten Fahr-Hydraulikmotors M₄ verbunden.

Je nachdem, in welcher Fahrtrichtung die Bodenbearbeitungsmaschine 10 bewegt werden soll, kann beispielsweise bei Vorwärtsfahrt der Antriebsmotor E durch eine Ansteuereinheit 52 zum Betreiben der Fahr-Hydraulikpumpen P₁, P₂ in derartiger Förderrichtung angesteuert werden, dass diese Fluid an ihrem jeweiligen ersten Fluidanschluss 28, 34 in die erste Hydraulikleitung L₁ bzw. die zweite Hydraulikleitung L₂ einspeisen und daher das unter hohem Druck stehende Fluid, beispielsweise Hydrauliköl, über die jeweiligen ersten Fluidanschlüsse 30, 32, 36, 38 in die Fahr-Hydraulikmotoren M₁, M₂, M₃, M₄ einspeisen.

Die Fahr-Hydraulikmotoren M₁, M₂, M₃, M₄ geben in diesem Zustand das Fluid unter deutlich gesenktem Druck an ihren jeweiligen zweiten Fluidanschlüssen 48, 42, 44, 50 in die dritte Hydraulikleitung L₃ bzw. die vierte Hydraulikleitung L₄ ab, über welche das Fluid zu den zweiten Fluidanschlüssen 40, 46 der Fahr-Hydraulikpumpen P₁, P₂ zurückströmt.

Soll die Bodenbearbeitungsmaschine 10 in entgegengesetzter Richtung, also beispielsweise in Rückwärtsfahrtrichtung, bewegt werden, wird der Antriebsmotor E derart angesteuert, dass die von diesem angetriebenen Fahr-Hydraulikpumpen P₁, P₂ das Fluid über ihre jeweiligen zweiten Fluidanschlüsse 40, 46 in die dritte Hydraulikleitung L₃ bzw. die vierte Hydraulikleitung L₄ abgeben. Über die dritte Hydraulikleitung L₃ strömt das von der ersten Fahr-Hydraulikpumpe P₁ geförderte Fluid zu den zweiten Fluidanschlüssen 42, 44 des zweiten Fahr-Hydraulikmotors M₂ und des dritten Fahr-Hydraulikmotors M₃. Über die vierte Hydraulikleitung L₄ strömt das von der zweiten Fahr-Hydraulikpumpe P₂ geförderte Fluid zu den zweiten Fluidanschlüssen 48, 50 des ersten Fahr-Hydraulikmotors M₁ bzw. des vierten Fahr-Hydraulikmotors M₄. Der erste Fahr-Hydraulikmotor M₁ und der zweite Fahr-Hydraulikmotor M₂ geben in diesem Betriebszustand an ihren ersten Fluidanschlüssen 30, 32 Fluid über die erste Hydraulikleitung L₁ zum ersten Fluidanschluss 28 der ersten Fahr-Hydraulikpumpe 28 ab, und der dritte Fahr-Hydraulikmotor M₃ sowie der vierte Fahr-Hydraulikmotor M₄ geben an ihren ersten Fluidanschlüssen 36, 38 Fluid über die zweite Fluidleitung L₂ zum ersten Fluidanschluss 34 der zweiten Fahr-Hydraulikpumpe P₂ ab.

Vermittels einer allgemein mit 53 bezeichneten Einspeiseanordnung können insbesondere im Bereich der Fahr-Hydraulikmotoren M₁, M₂, M₃, M₄ auftretende Fluidleckagen durch das Einspeisen von Fluid jeweils auf der Niederdruckseite des Hydraulikkreislaufs 26 ausgeglichen werden. Die Einspeiseanordnung 54 umfasst hierzu eine beispielsweise durch einen dieser zugeordneten Antriebsmotor angetriebene Einspeisepumpe S, welche Fluid aus einem Fluidreservoir F abzieht und über vier Einspeiseventile E₁, E₂, E₃, E₄ jeweils in die erste Hydraulikleitung L₁, die zweite Hydraulikleitung L₂, die dritte Hydraulikleitung L₃ bzw. die vierte Hydraulikleitung L₄ einspeist.

Bei dem in Fig. 2 dargestellten hydraulischen Antriebssystem 24 sind, unabhängig davon, in welcher Richtung die Bodenbearbeitungsmaschine 10 bewegt wird bzw. in welche Richtung die den verschiedenen Antriebsrollensegmenten 12a, 12b, 14a, 14b zugeordneten Fahr-Hydraulikmotoren M₁, M₂, M₃, M₄ drehen, jeweils zwei Fahr-Hydraulikmotoren hochdruckseitig, also zuflussseitig mit derselben Fahr-Hydraulikpumpe P₁ bzw. P₂ verbunden. Bei Abgabe von Fluid über die jeweiligen ersten Fluidanschlüsse 28, 34 der Fahr-Hydraulikpumpen P₁, P₂ sind die Fahr-Hydraulikmotoren M₁, M₂ hochdruckseitig mit der ersten Fahr-Hydraulikpumpe 28 verbunden und sind die Fahr-Hydraulikmotoren M₃, M₄ hochdruckseitig mit der zweiten Fahr-Hydraulikpumpe P₂ verbunden.

An der Niederdruckseite, also abflussseitig, sind jedoch nicht jeweils die auch hochdruckseitig mit einer der Fahr-Hydraulikpumpen verbundenen Fahr-Hydraulikmotoren auch mit derselben Fahr-Hydraulikpumpe verbunden. Nur einer der hochdruckseitig mit einer Fahr-Hydraulikpumpe verbundenen Fahr-Hydraulikmotoren ist auch niederdruckseitig mit dieser Fahr-Hydraulikpumpe verbunden, während der andere Fahr-Hydraulikmotor niederdruckseitig mit der anderen Fahr-Hydraulikpumpe verbunden ist. Im dargestellten Ausgestaltungsbeispiel bedeutet dies, dass bei Abgabe von Fluid über die ersten Fluidanschlüsse 28, 34 der Fahr-Hydraulikpumpen P₁, P₂ der zweite Fahr-Hydraulikmotor M₂ und der dritte Fahr-Hydraulikmotor M₃ über die dritte Hydraulikleitung M₃ mit der ersten Fahr-Hydraulikpumpe P₁ verbunden sind, während der erste Fahr-Hydraulikmotor M₁ und der vierte Fahr-Hydraulikmotor M₄ über die vierte Hydraulikleitung M₄ mit der zweiten Fahr-Hydraulikpumpe P₂ verbunden sind.

Bei Bewegung in entgegengesetzter Richtung, also bei Abgabe von Fluid über die jeweiligen zweiten Fluidanschlüsse 40, 46 der Fahr-Hydraulikpumpe P₁, P₂, sind hochdruckseitig, also über die dritte Hydraulikleitung L₃, der zweite Fahr-Hydraulikmotor M₂ und der dritte Fahr-Hydraulikmotor M₃ mit der ersten Fahr-Hydraulikpumpe 28 verbunden, während über die vierte Hydraulikleitung L₄ der erste Fahr-Hydraulikmotor M₁ und der vierte Fahr-Hydraulikmotor M₄ mit der zweiten Fahr-Hydraulikpumpe P₂ verbunden sind. In diesem Zustand sind niederdruckseitig der erste Fahr-Hydraulikmotor M₁ und der zweite Fahr-Hydraulikmotor M₂ über die erste Hydraulikleitung L₁ mit der ersten Fahr-Hydraulikpumpe P₁ verbunden, während der dritte Fahr-Hydraulikmotor M₃ und der vierte Fahr-Hydraulikmotor M₄ über die zweite Hydraulikleitung L₂ mit der zweiten Fahr-Hydraulikpumpe P₂ verbunden sind.

Da bei einem derartigen hydraulischen Antriebssystem 24 jede der Fahr-Hydraulikpumpen P₁, P₂ im Förderbetrieb nur so viel Fluid niederdruckseitig aufnehmen kann, wie sie hochdruckseitig abgibt, ist es von Bedeutung, dass bei dieser kreuzweisen Verschaltung der Fahr-Hydraulikmotoren M₁, M₂, M₃, M₄ mit den Fahr-Hydraulikpumpen P₁, P₂ jede der Fahr-Hydraulikpumpen P₁, P₂ im Wesentlichen die gleiche Fluidmenge fördert und jeder der Fahr-Hydraulikmotoren M₁, M₂, M₃, M₄ im Wesentlichen die gleiche Fluidmenge aufnimmt. Insbesondere bei Ausgestaltung als elektrohydraulisches Antriebssystem ist es dabei vorteilhaft, wenn die Fahr-Hydraulikpumpen P₁, P₂ ein konstantes Fördervolumen und die Fahr-Hydraulikmotoren M₁, M₂, M₃, M₄ ein konstantes Schluckvolumen aufweisen. Änderungen in der Förderrate können allein durch Änderung der Antriebsdrehzahl des als Elektromotor ausgebildeten Antriebsmotors E erzeugt werden. Bei derartiger Ausgestaltung der Fahr-Hydraulikpumpen P₁, P₂ und Fahr-Hydraulikmotoren M₁, M₂, M₃, M₄ mit jeweils gleichem Fördervolumen bzw. Schluckvolumen drehen sich alle Fahr-Hydraulikmotoren M₁, M₂, M₃, M₄ mit der gleichen Drehzahl bzw. treiben die diesen jeweils zugeordneten Antriebsrollensegmente 12a, 12b, 14a, 14b zur Drehung mit der gleichen Drehzahl an. Dies wiederum erfordert, dass alle Antriebsrollensegmente 12a, 12b, 14a, 14b den gleichen Durchmesser aufweisen. Weisen die in Zuordnung zu den verschiedenen Drehachsen D1, D2 vorgesehenen Antriebsrollen 12, 14 einander unterschiedliche Durchmesser auf, können bei der insbesondere in den Figuren 1 und 2 dargestellten Zuordnung der Fahr-Hydraulikmotoren M₁, M₂, M₃, M₄ zu den Antriebsrollensegmenten 12a, 12b, 14a, 14b für die Antriebsrollensegmente 12a, 12b einerseits und die Antriebsrollensegmente 14a, 14b andererseits Fahr-Hydraulikmotoren mit unterschiedlichem Schluckvolumen eingesetzt werden.

Durch die kreuzweise Verschaltung der Fahr-Hydraulikmotoren M₁, M₂, M₃, M₄ wird erreicht, dass keines der Antriebsrollensegmente 12a, 12b, 14a, 14b in einen Schlupfzustand gelangen kann, in welchem durch einen Anstieg der Drehzahl des zugeordneten Fahr-Hydraulikmotors eine übermäßig große Fluidmenge über diesen abströmt. Würde beispielsweise am ersten Antriebsrollensegment 12a durch einen Traktionsverlust Schlupf auftreten, würde dies zur Folge haben, dass aufgrund einer entsprechend höheren Drehzahl des Fahr-Hydraulikmotors M₁ dieser eine größere Fluidmenge aufnimmt und dementsprechend auch abgibt. Da der erste Fahr-Hydraulikmotor M₁ in einem Zustand, in welchem dieser beispielsweise über die erste Hydraulikleitung L₁ Fluid von der ersten Fahrt-Hydraulikpumpe P₁ aufnimmt, das aufgenommene Fluid in die vierte Fluidleitung L₄ abgibt, und da der von der anderen Fahr-Hydraulikpumpe P₂ gespeiste vierte Fahr-Hydraulikmotor M₄ in diesem Zustand die einer normalen Traktion entsprechende Fluidmenge in die vierte Hydraulikleitung L₄ abgibt, kann die vierte Hydraulikleitung L₄ vom ersten Fahr-Hydraulikmotor M₁ nur die Fluidmenge aufnehmen, die dieser grundsätzlich auch in einem schlupffreien Zustand abgeben würde. Der erste Fahr-Hydraulikmotor M₁ könnte daher grundsätzlich auch bei einem Traktionsverlust des zugeordneten ersten Antriebsrollensegments 12a nicht schneller drehen, als die anderen Fahr-Hydraulikmotoren M₂, M₃, M₄ und daher auch nicht zu einem übermäßigen Abfluss von Fluid aus der ersten Hydraulikleitung L₁ führen.

Aufgrund der vorangehend angesprochenen Fluidleckagen besteht jedoch grundsätzlich die Möglichkeit, dass kurzzeitig der erste Fahr-Hydraulikmotor M₁ bei Auftreten eines Traktionsverlustes am zugeordneten ersten Antriebsrollensegment 12a eine größere Fluidmenge abgibt, als dies im nicht schlupfenden Zustand der Fall wäre. Diese größere in die vierte Hydraulikleitung L₄ über den ersten Fahr-Hydraulikmotor M₁ eingespeiste Fluidmenge muss dann von der Einspeiseanordnung 53 zum Beibehalten des definierten Drucks an der Niederdruckseite des Hydraulikkreislaufs 26 nicht nachgespeist werden.

Eine derartige kurzzeitige schlupfbedingte Zunahme der Drehzahl des ersten Fahr-Hydraulikmotors M₁ führt zu einem spontanen Druckabfall auf der Hochdruckseite, in diesem Falle also in der ersten Hydraulikleitung L₁. Dieser Druckabfall hat zur Folge, dass das am ersten Fahr-Hydraulikmotor erzeugte Antriebsdrehmoment absinkt, und zwar auf einen derartigen Wert, dass auch das eine geringere Traktion aufweisende erste Antriebsrollensegment 12a wieder schlupffrei betrieben wird. Diese Abnahme des Antriebsdrehmoments am ersten Fahr-Hydraulikmotor M₁ führt auch zu einer entsprechenden Abnahme des Antriebsdrehmoments des mit dem gleichen Druck beaufschlagten zweiten Fahr-Hydraulikmotors M₂. Da grundsätzlich die Antriebsleistung des Antriebsmotors E beibehalten wird, entsteht in der aus der zweiten Fahr-Hydraulikpumpe P₂ gespeisten zweiten Hydraulikleitung L₂ ein entsprechend höherer Druck, so dass die aus der zweiten Hydraulikleitung L₂ gespeisten Fahr-Hydraulikmotoren M₃, M₄ mit einem entsprechend erhöhten Antriebsdrehmoment betrieben werden.

Die vorangehend beschriebene selbständige Einregelung des Antriebsdrehmoments bzw. der Drehzahl eines Antriebsrollensegments bei Auftreten eines Traktionsverlustes ist unabhängig davon, an welchem der Antriebsrollensegmente der Traktionsverlust auftritt und in welcher Richtung die Bodenbearbeitungsmaschine 10 bewegt wird. Aufgrund der abflussseitigen Verknüpfung jedes Fahr-Hydraulikmotors M₁, M₂, M₃, M₄ mit einem anderen Fahr-Hydraulikmotor, der nicht aus der gleichen Fahr-Hydraulikpumpe gespeist wird, blockieren die Fahr-Hydraulikmotoren sich gegenseitig gegen einen schlupfbedingten Anstieg der Drehzahl.

Trotz dieser gegenseitigen Blockierung der abflussseitig miteinander verknüpften Fahr-Hydraulikmotoren M₁, M₂, M₃, M₄ besteht insbesondere bei der in den Fig. 1, 2 und 3 erkennbaren Zuordnung der Fahr-Hydraulikmotoren M₁, M₂, M₃, M₄ zu den Antriebsrollensegmenten 12a, 12b, 14a, 14b die Möglichkeit, dass bei Kurvenfahrt das jeweils kurveninnere Paar von Antriebsrollensegmenten 12a, 14a bzw. 12b, 14b mit geringerer Drehzahl dreht, als das jeweilige kurvenäußere Paar von Antriebsrollensegmenten 12a, 14a bzw. 12b, 14b. Ein beispielsweise aufgrund einer geringeren Drehzahl des Antriebsrollensegments 12a verursachter geringerer Fluidabfluss des ersten Fahr-Hydraulikmotors M₁ wird durch einen entsprechend erhöhten Fluidabfluss des vierten Fahr-Hydraulikmotors M₄ derart kompensiert, dass deren gemeinsamer Fluidabfluss wieder der Summe der bei gleicher Drehzahl vorhandenen Fluidabflussmengen dieser beiden Fahr-Hydraulikmotoren M₁, M₄ entspricht. Entsprechendes gilt auch für die Fahr-Hydraulikmotoren M₂, M₃ bzw. jede bei Bewegung in der anderen Fahrtrichtung sich ergebende Paarung von abflussseitig miteinander verknüpften Fahr-Hydraulikmotoren.

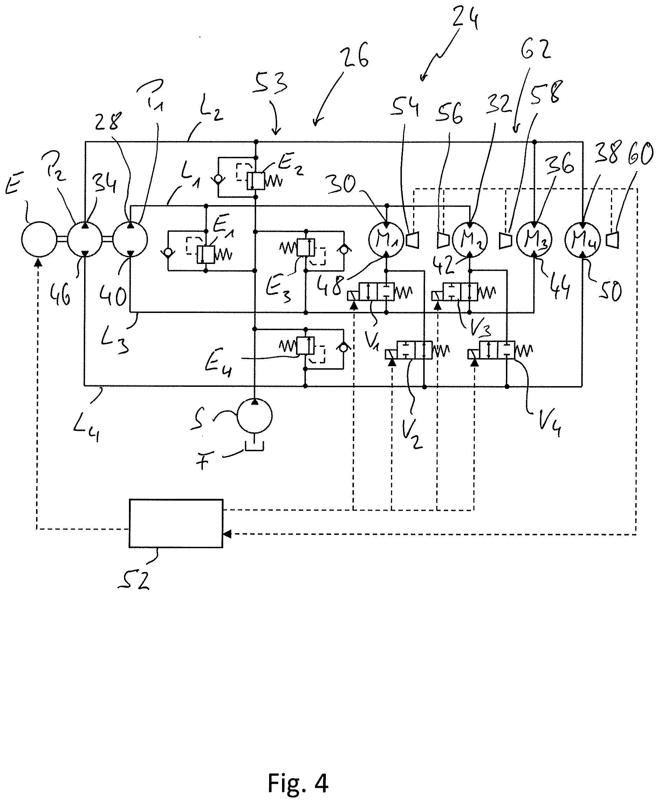

Die Fig. 4 zeigt ein Ausgestaltungsbeispiel des hydraulischen Antriebssystems 24, bei welchem die Wahrscheinlichkeit des Entstehens eines Schlupfzustandes an einem der Antriebsrollensegmente 12a, 12b, 14a, 14b noch weiter reduziert ist. Man erkennt in Fig. 4, dass beispielsweise in Zuordnung zum ersten Fahr-Hydraulikmotor M₁ und in Zuordnung zum zweiten Fahr- Hydraulikmotor M₂ jeweils zwei Ventileinheiten V₁, V₂ bzw. V₃, V₄ vorgesehen sind. Durch die erste Ventileinheit V₁ kann der zweite Fluidanschluss 48 des ersten Fahr-Hydraulikmotors M₁ wahlweise mit der dritten Hydraulikleitung L₃ verbunden oder von dieser getrennt werden. Entsprechend kann durch die zweite Ventileinheit V₂ der zweite Fluidanschluss 48 des ersten Fahr-Hydraulikmotors M₁ wahlweise mit der vierten Hydraulikleitung L₄ verbunden oder von dieser getrennt werden.

Die von der Ansteuereinheit 52 angesteuerten Ventileinheiten V₁, V₂ werden grundsätzlich derart angesteuert, dass dann, wenn eine der Ventileinheiten V₁, V₂ eine Verbindung des zweiten Fluidanschlusses 48 des ersten Fahr-Hydraulikmotors M₁ herstellt, die andere Ventileinheit die Verbindung mit der zugeordneten Hydraulikleitung unterbricht. Der zweite Fluidanschluss 48 des ersten Fahr-Hydraulikmotors M₁ ist daher entweder in Verbindung mit der dritten Fluidleitung L₃ oder in Verbindung mit der vierten Fluidleitung L₄.

Die dem zweiten Fahr-Hydraulikmotor M₂ zugeordnete dritte Ventileinheit V₃ stellt wahlweise eine Verbindung des zweiten Fluidanschlusses 42 mit der dritten Hydraulikleitung L₃ her oder unterbricht diese. Gleichermaßen stellt die vierte Ventileinheit V₄ wahlweise eine Verbindung zwischen dem zweiten Fluidanschluss 42 des zweiten Fahr-Hydraulikmotors M₂ mit der vierten Fluidleitung M₄ her oder unterbricht diese. Auch die beiden Ventileinheiten V₃, V₄ werden durch die Ansteuereinheit 52 derart angesteuert, dass dann, wenn eine der Ventileinheiten die Verbindung mit der zugeordneten Hydraulikleitung herstellt, die andere Ventileinheit in ihrem Unterbrechungszustand ist.

Weiter werden die vier Ventileinheiten V₁, V₂, V₃, V₄ durch die Ansteuereinheit 52 derart angesteuert bzw. betrieben, dass ein Zustand, in welchem die beiden zweiten Ausgangsanschlüsse 48, 42 der Fahr-Hydraulikmotoren M₁, M₂ in Verbindung mit der gleichen Hydraulikleitung L₃ bzw. L₄ sind, nicht auftritt. Wenn der zweite Fluidanschluss 48 des ersten Fahr-Hydraulikmotors M₃, so wie dies in Fig. 3 dargestellt ist, in Verbindung mit der vierten Hydraulikleitung L₄ ist, ist der zweite Fluidanschluss 42 des zweiten Fahr-Hydraulikmotors M₂ in Verbindung mit der dritten Fluidleitung L₃ und umgekehrt.

Der in Fig. 4 dargestellte Schaltzustand der Ventileinheiten V₁, V₂, V₃, V₄ entspricht somit grundsätzlich dem in Fig. 3 unveränderbar vorhandenen Verbindungszustand, in welchem der zweite Fluidanschluss 48 des ersten Fahr-Hydraulikmotors M₁ in Verbindung mit der vierten Hydraulikleitung L₄ ist und der zweite Fluidanschluss 42 des zweiten Fahr-Hydraulikmotors M₂ in Verbindung mit der dritten Fluidleitung L₃ ist.

Würde in einem derartigen Zustand an den beiden an der gleichen Seite des Bodenverdichters 10 bezüglich der Maschinenlängsrichtung R, also an der gleichen Seite in der Maschinenquerrichtung Q positionierten Antriebsrollensegmenten 12a, 14a oder 12b, 14b ein Traktionsverlust auftreten, so kann im Hydraulikkreislauf 26 ein Fluidkurzschluss auftreten, in welchem das gesamte jeweils durch die Fahr-Hydraulikpumpen P₁, P₂ geförderte Fluid über die den schlupfenden Antriebsrollensegmente zugeordneten Fahr-Hydraulikmotoren abfließt, während kein Fluid über die den nicht schlupfenden Antriebsrollensegmenten zugeordneten Fahr-Hydraulikmotoren strömt.

Um diesem Problem zu begegnen, sind bei dem in Fig. 4 dargestellten hydraulischen Antriebssystem 26 in Zuordnung zu den Fahr-Hydraulikmotoren M₁, M₂, M₃, M₄ Drehzahlsensoren 54, 56, 58, 60 einer Schlupferfassungsanordnung 62 vorgesehen. Über das von den Drehzahlsensoren 54, 56, 58, 60 abgegebene Drehzahlsignal wird der Ansteuereinheit 52 Information darüber zugeführt, an welchem der Antriebsrollensegmente 12a, 14a, 12b, 14b ein Traktionsverlust auftritt.

Tritt beispielsweise gleichzeitig an den Antriebsrollensegmenten 12b, 14b ein Traktionsverlust mit entsprechendem Schlupf auf, was in dem in Fig. 3 dargestellten Schaltzustand dazu führen würde, dass das gesamte in die zweite Hydraulikleitung L₂ eingespeiste Fluid über den vierten Fahr-Hydraulikmotor M₄ abströmen würde und das gesamte in die erste Hydraulikleitung L₁ eingespeiste Fluid über den zweiten Fahr-Hydraulikmotor M₂ abströmen würde, können die vier Ventileinheiten V₁, V₂, V₃, V₄ ausgehend von dem in Fig. 3 dargestellten Schaltzustand umgeschaltet werden, so dass dann der erste Fahr-Hydraulikmotor M₁ abströmseitig an die dritte Hydraulikleitung L₃ angekoppelt ist, während der zweite Fahr-Hydraulikmotor M₂ abströmseitig an die vierte Hydraulikleitung L₄ angekoppelt ist. In diesem Zustand sind dann die beiden Fahr-Hydraulikmotoren M₂, M₄, welche den einen Traktionsverlust aufweisenden Antriebsrollensegmenten 12b, 14b zugeordnet sind, abströmseitig miteinander verknüpft, so dass wiederum aufgrund des Umstandes, dass die zweite Fahr-Hydraulikpumpe P₂ an ihrem zweiten Fluidanschluss 46 nur eine definierte Fluidmenge aufnehmen kann, die über diese Fahr-Hydraulikmotoren M₂, M₄ abströmende Fluidmenge wieder im Wesentlichen auf diejenige Fluidmenge beschränkt ist, die auch im nicht schlupfenden Zustand durch diese hindurchströmt.

Es ist darauf hinzuweisen, dass bei einer alternativen Ausgestaltung die durch die Ventileinheiten V₁, V₂, V₃, V₄ eingeführte Variabilität auch erreicht werden könnte, wenn diese in Verbindung mit den Fahr-Antriebsmotoren M₃, M₄ und den Hydraulikleitungen L₃, L₄ vorgesehen wären oder wenn diese in Verbindung mit den Fahr-Hydraulikmotoren M₂ und M₃ oder in Verbindung mit den Fahr-Hydraulikmotoren M₁, M₄ jeweils in Zuordnung zur ersten Hydraulikleitung L₁ und zur zweiten Hydraulikleitung L₂ vorgesehen wären.

## Patentansprüche

1. Bodenbearbeitungsmaschine mit zwei in einer Maschinenlängsrichtung aufeinander folgend angeordneten, um eine jeweilige Drehachse (D₁, D₂) drehbaren Antriebsrollen (12, 14), wobei jede Antriebsrolle (12, 14) zwei in Richtung der zugeordneten Drehachse (D₁, D₂) aufeinander folgend angeordnete Antriebsrollensegmente (12a, 12b, 14a, 14b) umfasst, und mit einem hydraulischen Antriebssystem (24) für die Antriebsrollen (12, 14), wobei das hydraulische Antriebssystem (14) umfasst:
- in Zuordnung zu einem ersten Antriebsrollensegment (12a) der zwei Antriebsrollen (12, 14) einen ersten Fahr-Hydraulikmotor (M₁),
- in Zuordnung zu einem zweiten Antriebsrollensegment (12b) der zwei Antriebsrollen (12, 14) einen zweiten Fahr-Hydraulikmotor (M₂),
- in Zuordnung zu einem dritten Antriebsrollensegment (14a) der zwei Antriebsrollen (12, 14) einen dritten Fahr-Hydraulikmotor (M₃)
- in Zuordnung zu einem vierten Antriebsrollensegment (12b) der zwei Antriebsrollen (12, 14) einen vierten Fahr-Hydraulikmotor (M₄),
- eine erste Fahr-Hydraulikpumpe (P₁),
- eine zweite Fahr-Hydraulikpumpe (P₂),
- wenigstens einen Antriebsmotor (E) zum Antreiben der ersten Fahr-Hydraulikpumpe (P₁) und der zweiten Fahr-Hydraulikpumpe (P₂) zum Fördern von Hydraulikfluid zu den Fahr-Hydraulikmotoren (M₁, M₂, M₃, M4),
wobei:
- ein erster Fluidanschluss (28) der ersten Fahr-Hydraulikpumpe (P₁) vermittels einer ersten Hydraulikleitung (L₁) mit einem ersten Fluidanschluss (30) des ersten Fahr-Hydraulikmotors (M₁) und einem ersten Fluidanschluss (32) des zweiten Fahr-Hydraulikmotors (M₂) verbunden oder verbindbar ist,
- ein erster Fluidanschluss (34) der zweiten Fahr-Hydraulikpumpe (P₂) vermittels einer zweiten Hydraulikleitung (L₂) mit einem ersten Fluidanschluss (36) des dritten Fahr-Hydraulikmotors (M₃) und einem ersten Fluidanschluss (38) des vierten Fahr-Hydraulikmotors (M₄) verbunden oder verbindbar ist,
- ein zweiter Fluidanschluss (40) der ersten Fahr-Hydraulikpumpe (P₁) vermittels einer dritten Hydraulikleitung (L₃) mit einem zweiten Fluidanschluss (42) des zweiten Fahr-Hydraulikmotors (M₂) und einem zweiten Fluidanschluss (44) des dritten Fahr-Hydraulikmotors (M₃) verbunden oder verbindbar ist,
- ein zweiter Fluidanschluss (46) der zweiten Fahr-Hydraulikpumpe (P₂) vermittels einer vierten Hydraulikleitung (L₄) mit einem zweiten Fluidanschluss (48) des ersten Fahr-Hydraulikmotors (M₁) und einem zweiten Fluidanschluss (50) des vierten Fahr-Hydraulikmotors (M₄) verbunden oder verbindbar ist.

2. Bodenbearbeitungsmaschine nach Anspruch 1,
**dadurch gekennzeichnet, dass** beide Fahr-Hydraulikpumpen (P₁, P₂) durch einen gemeinsamen Antriebsmotor (E) zum Fördern von Hydraulikfluid angetrieben sind, oder /und dass beide Fahr-Hydraulikpumpen (P₁, P₂) das gleiche Fördervolumen aufweisen, oder/und dass alle Fahr-Hydraulikmotoren (M₁, M₂, M₃, M₄) das gleiche Schluckvolumen aufweisen.

3. Bodenbearbeitungsmaschine nach Anspruch 1 oder 2,
**dadurch gekennzeichnet, dass** der wenigstens eine Antriebsmotor (E) ein Elektromotor ist.

4. Bodenbearbeitungsmaschine nach einem der Ansprüche 1-3,
**dadurch gekennzeichnet, dass** jede Fahr-Hydraulikpumpe (P₁, P₂) eine Pumpe mit festem Fördervolumen ist, oder/und dass jeder Fahr-Hydraulikmotor (M₁, M₂, M₃, M₄) ein Motor mit festem Schluckvolumen ist.

5. Bodenbearbeitungsmaschine nach einem der Ansprüche 1-4,
**dadurch gekennzeichnet, dass**:
- in Zuordnung zu dem zweiten Fluidanschluss (48) des ersten Fahr-Hydraulikmotors (M₁) eine erste Ventileinheit (V₁) zum wahlweisen Herstellen und Unterbrechen einer Verbindung des zweiten Fluidanschlusses (48) des ersten Fahr-Hydraulikmotors (M₁) mit der dritten Hydraulikleitung (L₃) und eine zweite Ventileinheit (V₂) zum wahlweisen Herstellen und Unterbrechen einer Verbindung des zweiten Fluidanschlusses (48) des ersten Fahr-Hydraulikmotors (M₁) mit der vierten Hydraulikleitung (L₄) vorgesehen ist,
und
- in Zuordnung zu dem zweiten Fluidanschluss (42) des zweiten Fahr-Hydraulikmotors (M₂) eine dritte Ventileinheit (V₃) zum wahlweisen Herstellen und Unterbrechen einer Verbindung des zweiten Fluidanschlusses (42) des zweiten Fahr-Hydraulikmotors (M₂) mit der dritten Hydraulikleitung (L₃) und eine vierte Ventileinheit (V₄) zum wahlweisen Herstellen und Unterbrechen einer Verbindung des zweiten Fluidanschlusses (42) des zweiten Fahr-Hydraulikmotors (M₂) mit der vierten Hydraulikleitung (L₄) vorgesehen ist.

6. Bodenbearbeitungsmaschine nach Anspruch 5,
**dadurch gekennzeichnet, dass** eine Ansteueranordnung (52) zum Ansteuern der ersten Ventileinheit (V), der zweiten Ventileinheit (V₂), der dritten Ventileinheit (V) und der vierten Ventileinheit (V₄) vorgesehen ist, wobei die Ansteuereinheit (52) dazu ausgebildet ist:
- dann, wenn die erste Ventileinheit (V₁) zum Herstellen der Verbindung des zweiten Fluidanschlusses (48) des ersten Fahr-Hydraulikmotors (M₁) mit der dritten Hydraulikleitung (L₃) und die vierte Ventileinheit (V₄) zum Herstellen der Verbindung des zweiten Fluidanschlusses (42) des zweiten Fahr-Hydraulikmotors (M₂) mit der vierten Hydraulikleitung (L₄) betrieben werden, die zweite Ventileinheit (V₂) zum Unterbrechen der Verbindung des zweiten Fluidanschlusses (48) des ersten Fahr-Hydraulikmotors (M₁) mit der vierten Hydraulikleitung (L₄) und die dritte Ventileinheit (V₃) zum Unterbrechen der Verbindung des zweiten Fluidanschlusses (42) des zweiten Fahr Hydraulikmotors (M₂) mit der dritten Hydraulikleitung (L₃) zu betreiben,
und
- dann, wenn die erste Ventileinheit (V) zum Unterbrechen der Verbindung des zweiten Fluidanschlusses (48) des ersten Fahr-Hydraulikmotors (M₁) mit der dritten Hydraulikleitung (L3) und die vierte Ventileinheit (V₄) zum Unterbrechen der Verbindung des zweiten Fluidanschlusses (42) des zweiten Fahr-Hydraulikmotors (M₂) mit der vierten Hydraulikleitung (L₄) betrieben werden, die zweite Ventileinheit (V₂) zum Herstellen der Verbindung des zweiten Fluidanschlusses (48) des ersten Fahr-Hydraulikmotors (M₁) mit der vierten Hydraulikleitung (L₄) und die dritte Ventileinheit (V₃) zum Herstellen der Verbindung des zweiten Fluidanschlusses (42) des zweiten Fahr Hydraulikmotors (M₂) mit der dritten Hydraulikleitung (23) zu betreiben.

7. Bodenbearbeitungsmaschine nach einem der Ansprüche 1-6,
**dadurch gekennzeichnet, dass** eine Fluid-Einspeiseanordnung (53) vorgesehen ist zum Einspeisen von Fluid in wenigstens eine Fluidleitung von erster Fluidleitung (L₁), zweiter Fluidleitung (L₂), dritter Fluidleitung (L₃) und vierter Fluidleitung (L₄).

8. Bodenbearbeitungsmaschine nach einem der Ansprüche 1-7,
**dadurch gekennzeichnet, dass** eine erste Antriebsrolle (12) der zwei Antriebsrollen (12, 14) das erste Antriebsrollensegment (12a) und das zweite Antriebsrollensegment (12b) umfasst und eine zweite Antriebsrolle (14) der zwei Antriebsrollen (12, 14) das dritte Antriebsrollensegment (14a) und das vierte Antriebsrollensegment (14b) umfasst.

9. Bodenbearbeitungsmaschine nach Anspruch 8,
**dadurch gekennzeichnet, dass**, bezogen auf eine Maschinen-Längsrichtung (R), das erste Antriebsrollensegment (12a) und das dritte Antriebsrollensegment (14a) an einer ersten Seite der Bodenbearbeitungsmaschine (10) angeordnet sind und das zweite Antriebsrollensegment (12b) und das vierte Antriebsrollensegment (14b) an einer zweiten Seite der Bodenbearbeitungsmaschine (10) angeordnet sind.

10. Bodenbearbeitungsmaschine nach einem der Ansprüche 1-9,
**dadurch gekennzeichnet, dass** wenigstens eine Antriebsrolle (12, 14) der zwei Antriebsrollen (12, 14) eine Bodenbearbeitungswalze ist, wobei jedes Antriebsrollensegment (12a, 12b, 14a, 14b) der wenigstens einen Antriebsrolle (12, 14) durch ein Walzensegment bereitgestellt ist, oder/und dass wenigstens eine Antriebsrolle (14) der zwei Antriebsrollen (12, 14) wenigstens zwei Räder (16, 18, 20, 22) umfasst, wobei jedes Antriebsrollensegment (14a, 14b) der wenigstens einen Antriebsrolle (14) wenigstens ein Rad (16, 18, 20, 22) umfasst.

11. Bodenbearbeitungsmaschine nach einem der Ansprüche 1-10,
**dadurch gekennzeichnet, dass** eine Schlupferfassungsanordnung (62) zum Erfassen eines Schlupfzustandes wenigstens eines Antriebsrollensegments (12a, 12b, 14a, 14b), vorzugsweise jedes Antriebsrollensegments (12a, 12b, 14a, 14b), vorgesehen ist.

12. Bodenbearbeitungsmaschine nach Anspruch 11,
**dadurch gekennzeichnet, dass** die Schlupferfassungsanordnung (62) in Zuordnung zu wenigstens einem Antriebsrollensegment (12a, 12b, 14a, 14b), vorzugsweise jedem Antriebsrollensegment (12a, 12b, 14a, 14b), einen Drehzahlsensor (56, 58, 60, 62) umfasst.
